# EUROPEAN PATENT SPECIFICATION

(11) **EP 0 729 218 B1**
(45) Date of publication and mention of the grant of the patent: **28.08.2002**
(21) Application number: 96301175.4
(22) Date of filing: 20.02.1996
(51) Int. Cl.: H02K 26/00, H02K 41/035, H01F 7/14, H01F 7/16

(54) **Actuator**
Betätiger
Actionneur

(30) Priority: 21.02.1995 JP 5668695
(43) Date of publication of application: 28.08.1996
(73) Proprietor: MIKUNI CORPORATION, Chiyoda-ku, Tokyo 101-0021 (JP)
(72) Inventor: Muraji, Tetsuo, Odawara-shi, Kanagawa 250 (JP)
(74) Representative: Bluff, John William

(56) References cited:
- WO-A-92/10664
- US-A- 4 510 403

## Description

The present invention relates to an actuator.

A common form of actuator used to control the position of a moving member, for example a rotor, is a rotary solenoid, the position of which depends upon the coil current. The basic arrangement of such a rotary solenoid involves a rotor formed from a permanent magnet disposed between a pair of opposing magnetic pole pieces. The rotor is rotated by using magnetic flux from a magnetic source produced according to the operating current. To control the position of the rotor to a desired position, a spring is required to provide a counterforce proportional to the rotor position. The stop position of the rotor is determined by the balance between the torque induced by the coil current and the counterforce of the spring.

Such prior proposed apparatus involves the necessary provision of a mechanical element, namely a spring which inevitably involves problems in terms of reliability, for example vibration and wear of operating parts.

The present invention has arisen from our work seeking to provide an actuator which avoids the need for mechanical elements such as a spring providing a return or biasing force.

U.S. patents 4,510,403 and 5,234,192 disclose actuators of similar construction which avoid the need of a mechanical element such as a spring providing a return or biasing force.

U.S. patent specification 5,234,192 discloses an actuator comprising a permanent magnetic rotor disposed in a main air gap between a pair of opposed claw poles offset from one another by 180° in the circumferential direction. The claw poles provide pole gaps at opposite sides to promote engagement of the rotor with the pole gaps. The claw poles are connected in a magnetic circuit with a ring casing radially spaced from the claw poles to provide a toroidal space in which a current-receiving winding is disposed. To ensure strong engagement of the rotor with the pole gaps, each claw pole has a reluctance portion associated with it to increase the ratio of the magnetic resistances in the magnetic return path and in transverse direction of the claw poles aiding the provision of a return moment on the rotor to the position of engagement with the pole gaps. The claw poles with the rotor therebetween are mounted within a toroidal winding. Current supplied to the winding deflects the rotor from the position engaged with the pole gaps.

In accordance with the present invention, there is provided an actuator, comprising;
a pair of magnetic pole pieces separated by two subsidiary air gaps and a main air gap located between the subsidiary air gaps,
a permanent magnet member adapted to be coupled to a drive shaft, said permanent magnet member being disposed in said main air gap to be movable therein in response to a magnetic field developed between said pole pieces,
a magnetic circuit including a magnetic source connected to said pole pieces to develop a magnetic field between said pole pieces,
said magnetic circuit including a further air gap between said magnetic source and one of said pole pieces.

As will become clear from the description of a preferred embodiment given below, an actuator may be readily constructed in accordance with the present invention without any need for mechanical elements such as springs.

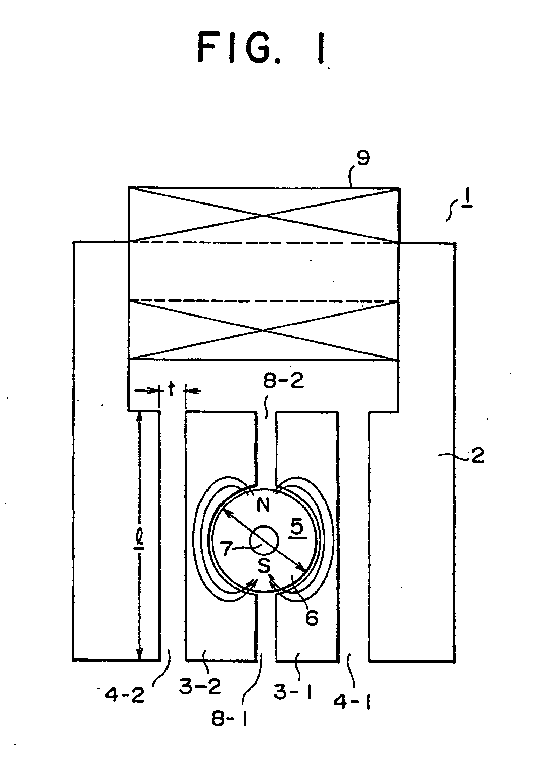

The invention is hereinafter more particularly described by way of example only with reference to the accompanying drawing, in which:-
Fig. 1 is a schematic view of a first embodiment of actuator constructed in accordance with the present invention;

Fig. 1 shows the'arrangement of one embodiment of the actuator according to the present invention. In Fig. 1, an actuator body 1 has a U-shaped magnetic path 2, and a pair of magnetic pole pieces 3-1 and 3-2 which are disposed at both ends, respectively, of the magnetic path 2. It should be noted that an air gap 4-1 is provided between the pole piece 3-1 and the magnetic path 2, and another air gap 4-2 between the pole piece 3-2 and the magnetic path 2. The air gaps 4-1 and 4-2 function as magnetic reluctance portions.

A main air gap 5 is provided between the pole pieces 3-1 and 3-2. Sub-air gaps 8-1 and 8-2 are provided at both sides, respectively, of the main air gap 5. A rotor 6 which is formed from a permanent magnet is disposed in the main air gap 5. The rotor 6 is adapted to rotate through a shaft 7. Reference numeral 9 denotes an electromagnetic coil (magnetic source).

The operation of this embodiment will be explained below.

When the electromagnetic coil 9 is not energized, no magnetic flux passes through the magnetic path 2. Accordingly, magnetic flux from the north pole of the rotor 6 flows to the south pole of the rotor 6 through the pole pieces 3-1 and 3-2 as shown by the solid lines in the figure.

In this case, all the magnetic flux flows via the main air gap 5. Therefore, there is no magnetic flux in either of the sub-air gaps 8-1 and 8-2, which lie at both sides (upper and lower sides as viewed in Fig. 1) of the rotor 6. That is, this state is the most stable in terms of magnetism, and the rotor 6 is at rest in this position (position shown in the figure).

Next, when the electromagnetic coil 9 is energized, magnetic flux from the magnetic source 9 passes through a path comprising the magnetic path 2, the magnetic reluctance 4-1, the sub-air gap 8-1 or 8-2, the pole piece 3-2, the magnetic reluctance 4-2 and the magnetic path 2. Accordingly, magnetomotive force thus produced is stored as magnetic energy in the air gaps 4-1 and 4-2 and the sub-air gaps 8-1 and 8-2, which function as magnetic reluctances in the magnetic path. Therefore, the rotor 6 rotates and comes to rest at a position where the stored magnetic energy becomes the smallest.

At this time, energy produced by the rotation of the rotor 6, which is formed from a permanent magnet, is also stored in the air gaps 4-1, 4-2, 8-1 and 8-2. Thus, according to this embodiment, the magnetic energy stored in the air gaps functions as a spring which has been used in the conventional rotary solenoid to store mechanical energy in order to determine a stop position. It should be noted that the amount of stored energy can be determined by the air gap width t and the cross-sectional area 1 of the magnetic path.

As can be seen, in the embodiment described above there is no need for a mechanical element such as a spring.

## Claims

1. An actuator comprising:
a pair of magnetic pole pieces (3-1, 3-2) separated by two subsidiary air gaps (8-1, 8-2) and a main air gap (5) located between the subsidiary air gaps (8-1, 8-2),
a permanent magnet member (6) adapted to be coupled to a drive shaft (7), said permanent magnet member (6) being disposed in said main air gap (5) to be movable therein in response to a magnetic field developed between said pole pieces (3-1, 3-2),
a magnetic circuit (2) including a magnetic source (9) connected to said pole pieces (3-1, 3-2) to develop a magnetic field between said pole pieces (3-1, 3-2),
said magnetic circuit (2) including a further air gap (4-1) between said magnetic source (9) and one (3-1) of said pole pieces.

2. An actuator as claimed in Claim 1 in which said magnetic circuit includes another air gap (4-2) between said magnetic source (9) and the other (3-2) of said pole pieces.

3. An actuator as claimed in Claim 1 or 2 in which said magnetic source comprises a winding energisable by a current to develop a magnetic field between said pole pieces (3-1, 3-2) that is dependent on the energising current.

4. An actuator as claimed in Claim 1, 2 or 3 in which said permanent magnet member (6) is a rotor mounted for rotation in said main air gap (5) to a position dependent on the magnetic field developed between said pole pieces (3-1, 3-2).

## Patentansprüche

1. Betätiger, der folgendes aufweist:
ein Paar von magnetischen Polstücken (3-1, 3-2), die durch zwei untergeordnete Luftspalte (8-1, 8-2) und einen Hauptluftspalt (5) getrennt sind, der zwischen den untergeordneten Luftspalten (8-1, 8-2) angeordnet ist,
ein Permanentmagnetglied (6), das an eine Antriebswelle (7) gekuppelt werden kann,
wobei das Permanentmagnetglied (6) in dem Hauptluftspalt (5) angeordnet ist, um darin in Reaktion auf ein Magnetfeld bewegbar zu sein, das zwischen den Polstücken (3-1, 3-2) entwickelt ist,
einen Magnetkreislauf (2), der eine Magnetquelle (9) einschließt, die an die Polstücke (3-1, 3-2) angeschlossen ist, um ein Magnetfeld zwischen den Polstücken (3-1, 3-2) zu entwickeln,
wobei der Magnetkreislauf (2) einen weiteren Luftspalt (4-1) zwischen der Magnetquelle (9) und einem (3-1) der Polstücke einschließt.

2. Betätiger nach Anspruch 1, in dem der Magnetkreislauf einen anderen Luftspalt (4-2) zwischen der Magnetquelle (9) und dem anderen (3-2) der Polstücke einschließt.

3. Betätiger nach Anspruch 1 oder 2, in dem die Magnetquelle eine Wicklung aufweist, die von einem Strom erregt werden kann, um ein Magnetfeld zwischen den Polstücken (3-1, 3-2) zu entwickeln, das von dem erregenden Strom abhängt.

4. Betätiger nach Anspruch 1, 2 oder 3, in dem das Permanentmagnetglied (6) ein Läufer ist, der zur Drehung in dem Hauptluftspalt (5) auf eine Stellung angebracht ist, die von dem Magnetfeld abhängt, das zwischen den Polstücken (3-1, 3-2) entwickelt ist.

## Revendications

1. Actionneur comportant :
une paire d'éléments de pôle magnétique (3-1, 3-2) séparés par deux vides atmosphériques complémentaires (8-1, 8-2) et un vide atmosphérique principal (5) situé entre les vides atmosphériques complémentaires (8-1, 8-2),
un élément aimant-permanent (6) adapté pour être couplé à un axe de commande (7), ledit élément aimant-permanent (6) étant situé dans ledit vide atmosphérique principal (5) pour y être amovible en réponse à un champ magnétique formé entre lesdits éléments de pôle (3-1,3-2),
un champ magnétique (2) comportant une source magnétique (9) reliée auxdits éléments de pôle (3-1, 3-2) pour développer un champ magnétique entre lesdits éléments de pôle (3-1, 3-2),
ledit circuit magnétique (2) prévoyant un vide atmosphérique supplémentaire (4-1) entre ladite source magnétique (9) et l'un (3-1) desdits éléments de pôle.

2. Actionneur tel que revendiqué à la revendication 1 selon lequel ledit circuit magnétique prévoit un autre vide atmosphérique (4-2) entre ladite source magnétique (9) et l'autre (3-2) desdits éléments de pôle.

3. Actionneur tel que revendiqué à la revendication 1 ou 2 selon laquelle ladite source magnétique comporte un enroulement admettant l'excitation par un courant électrique de manière à développer entre lesdits éléments de pôle (3-1, 3-2) un champ magnétique qui est dépendant du courant d'excitation.

4. Actionneur tel que revendiqué à la revendication 1, 2 ou 3 selon laquelle ledit élément aimant-permanent (6) est un rotor assurant la rotation dans lesdites vides atmosphériques (5) en une position dépendante du champ magnétique qui se forme entre lesdits éléments de pôle (3-1,3-2).
